## Europäisches Patentamt
## European Patent Office
## Office européen des brevets

(19)

(11) Numéro de publication: **0 041 018**
**B1**

(12) # FASCICULE DE BREVET EUROPEEN

(45) Date de publication du fascicule du brevet:
25.05.83

(51) Int. Cl.³: **B 23 D 36/00**

(21) Numéro de dépôt: **81400803.3**

(22) Date de dépôt: **21.05.81**

(54) **Dispositif de commande de cisailles rotatives.**

(30) Priorité: **23.05.80 FR 8011624**

(43) Date de publication de la demande:
**02.12.81 Bulletin 81/48**

(45) Mention de la délivrance du brevet:
**25.05.83 Bulletin 83/21**

(84) Etats contractants désignés:
**AT BE DE IT**

(56) Documents cités:
**DE-B-1 117 712**
**FR-A-2 345 255**
**FR-A-2 408 437**
**GB-A-1 516 801**
**LU-A-53 974**

(73) Titulaire: **CLESID S.A., 51 rue Sibert,
F-42403 Saint-Chamond (FR)**

(72) Inventeur: **Mornas, Jean-Philippe, 96 rue Antoine
Durafour, F-42100 Saint-Etienne (FR)**

(74) Mandataire: **Dupuy, Louis et al, CREUSOT-LOIRE 15 rue
Pasquier, F-75383 Paris Cedex 8 (FR)**

## Dispositif de commande de cisailles rotatives

La présente invention se rapporte à un dispositif de commande de cisailles rotatives, plus spécialement destinées à la coupe de feuilles métalliques à la volée, c'est-à-dire sans arrêt du produit.

On connait les cisailles pour coupe à longueur de produits plats à la volée (FR-A-2 345 255 et 2 408 437) comportant deux lames coupantes placées chacune sur un rotor cylindrique, les axes de ces deux rotors étant parallèles entre eux et au plan de la feuille à couper. La distance entre les axes des rotors et leur entraînement mécanique sont tels que durant une petite fraction de leur rotation, correspondant généralement à un angle de quelques degrés, les deux lames coupantes engrènent entre elles, provoquant l'action de cisaillage du produit qui circule entre ces rotors. Par ailleurs, le diamètre des rotors est tel, qu'hormis cette fraction de la rotation dont l'amplitude est appelée angle de coupe, le produit peut circuler librement sans les toucher ni l'un ni l'autre.

Les deux rotors équipant ces appareils connus sont entrainés à partir d'un moteur électrique à vitesse variable par l'intermédiaire d'un train d'engrenages de synchronisation. Ce moteur est en général un moteur shunt à courant continu, et sa tension d'alimentation, donc sa vitesse, est commandée en fonction de données relatives en particulier à la vitesse de défilement du produit et à la longueur des coupes à effectuer. Entre deux coupes, le moteur ralentit, s'arrête quelque temps selon la longueur à couper, puis s'accélère jusqu'à ce que la vitesse périphérique des rotors au niveau des lames soit égale à la vitesse linéaire du produit.

Dans le cas où l'on désire, à l'aide de ce genre d'appareil, effectuer la coupe de produits très résistants, tels que des Bandes métalliques ou des bandes de matière plastique par exemple, et lorsque ce produit défile à faible vitesse, à 25 mètres par minute par exemple pour une bande d'acier doux de 4 mm d'épaosseur et 1500 mm de largeur, on constate que la coupe n'est plus possible, alors qu'elle l'était pour une vitesse de défilement plus élevée, car les lames se bloquent dans le produit pendant la coupe. Il se trouve dans ce cas que le ralentissement du moteur provoqué par la coupe est tellement brutal que le courant d'induit n'a pas le temps de s'établir suffisamment vite pour enrayer ce ralentissement, de sorte que le moteur se bloque.

Le dispositif de commande de cisaille rotative selon l'invention a pour but de remédier à cette situation, et donc d'éviter le blocage du moteur dans certaines conditions de dureté du produit et de vitesse de défilement de celui-ci. Il est caractérisé en ce qu'il est muni d'un dispositif de mesure de l'effort de coupe permettant de commander un régulateur d'alimentation relié au moteur, de manière à entrainer pendant la coupe une augmentation de tension de courant d'alimentation dudit moteur suffisante pour éviter son blocage, ledit dispositif de mesure de l'effort de coupe étant constitué par un ou plusieurs dispositifs dynamométriques relié(s) au(x) dispositif(s) de support d'extrémité d'au moins un desdits rotors.

L'invention sera mieux comprise par la description suivante d'un exemple non limitatif de réalisation, en référence aux dessins annexés dans lesquels:

la figure 1 est une représentation schématique du dispositif de commande de cisailles rotatives conforme à l'invention;

la figure 2 est une vue en bout et coupe partielle d'une cisaille rotative équipée de dynamomètres pour application du dispositif selon l'invention.

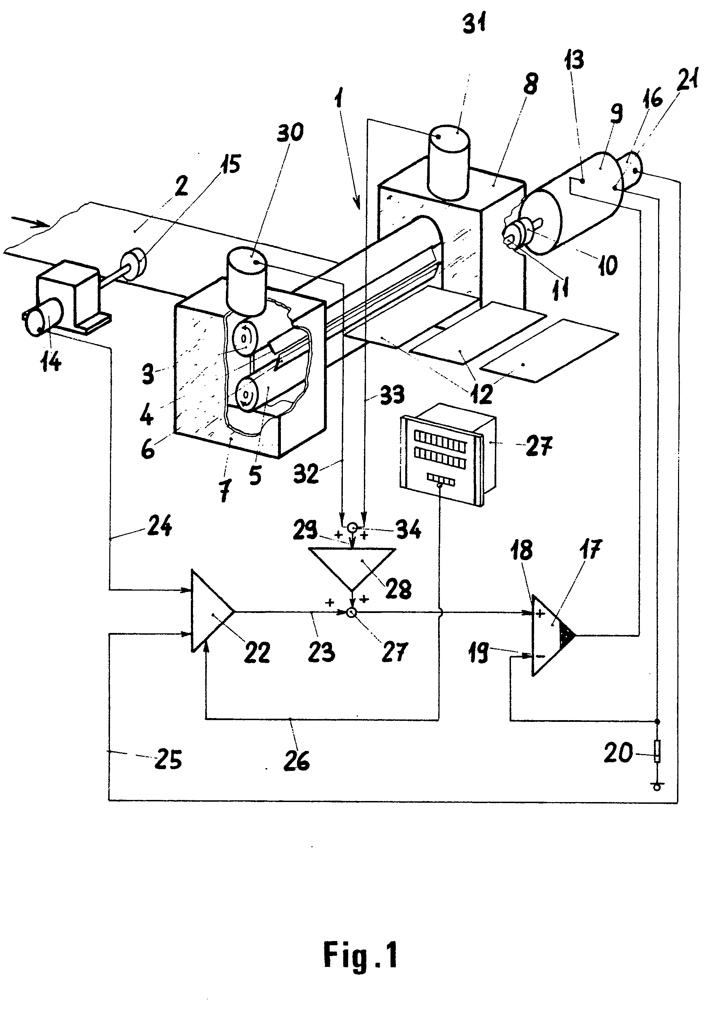

On reconnait sur la figure 1 une cisaille rotative 1 pour coupe à longueur d'une bande métallique 2 défilant continûment. De manière classique, la cisaille comporte:

— un rotor supérieur 3 portant le couteau supérieur 4,
— un rotor inférieur 5 portant le couteau inférieur 6,
— un premier carter d'extrémité 7 renfermant en particulier les organes de soutien, ou montants, non apparents sur cette figure, des rotors 3 et 5,
— un deuxième carter d'extrémité 8 renfermant les engrenages de synchronisation des rotors l'un par rapport à l'autre, les montants, ainsi que les dispositifs mécaniques de rattrapage des jeux, tous ces dispositifs étant bien classiques pour ce genre d'appareil,
— un moteur électrique à courant continu 9 à excitation parallèle, qui assure, par l'intermédiaire d'un accouplement 10 et d'un arbre 11, l'entrainement desdits engrenages et par suite des rotors 3 et 5.

Comme on le voit sur le dessin, le produit 2 entre par la gauche de la cisaille 1 et ressort à droite sur le schéma, partagé en coupes 12 de longueurs égales.

Le moteur 9 est un moteur à vitesse variable, dépendant de son courant d'induit, c'est-à-dire en pratique de la tension appliquée sur sa borne d'alimentation 13. Cette tension est déterminée par un circuit de commande et de régulation comportant en particulier:

— un premier générateur d'impulsions électriques 14, entrainé par un galet mesureur 15, lui-même entraîné par pression sur le produit 2; le générateur d'impulsions 14 fournit, lorsque le produit 2 se déplace, un train d'impulsions dont le nombre est proportionnel au déplacement du produit,

2

— un second générateur d'impulsions électriques 16, accouplé au moteur 9 et fournissant par suite un train d'impulsions dont le nombre est proportionnel à la distance circonférencielle parcourue par les lames équipant chacun des rotors; les générateurs 14 et 16, ainsi que le diamètre du galet mesureur 15 sont choisis de façon qu'il y ait égalité entre la longueur du déplacement du produit 2 correspondant à une impulsion délivrée par le générateur 14, et la longueur de l'arc balayé par une des lames pour une impulsion délivrée par le générateur 16,

— un circuit 17 de régulation d'intensité et alimentation électrique du moteur 9, tel qu'un circuit à diodes commandées disponible dans le commerce, dont la sortie est branchée à la borne 13 d'alimentation du moteur, et muni d'une première entrée 18 recevant une tension de référence et d'une seconde entrée 19 recevant une tension électrique représentant la mesure de l'intensité du courant d'induit du moteur, mesure effectuée à l'aide d'un shunt 20 relié à une borne de mesure 21 du moteur 9.

La référence d'intensité en 18 est fournie en particulier par un circuit classique de régulation en position. Un tel circuit comprend un régulateur de position 22, de type aisément disponible dans le commerce, qui délivre sur sa sortie 23 une tension électrique destinée à représenter, dans les réalisations connues jusqu'alors, la consigne d'intensité à fournir à la régulation d'intensité. Cette consigne est définie par le régulateur 22 à partir de trois informations:

— en 24 les impulsions émises par le générateur d'impulsions 14 entrainé par le produit 2,
— en 25 les impulsions émises par le générateur d'impulsions 16 entrainé par la cisaille 1,
— en 26 l'information convenablement codée de la longueur à couper, émise par un boitier de commande de longueur de coupe 27 de type classique.

Dans les réalisations connues, le fil 23, en sortie du régulateur de position 22, est directement connecté au fil 18 d'entrée de référence d'intensité du régulateur de courant 17. Par contre, dans la réalisation de l'invention schématisée sur la figure 1, la liaison se fait à travers un additionneur 27. Celui-ci, en plus de la référence fournie sur le fil 23, reçoit une seconde référence fournie par un amplificateur 28 : la référence appliquée en 18 au régulateur d'intensité 17 est donc la somme de ces deux références.

L'amplificateur 28 est destiné à la mise à l'échelle d'un signal appliqué à son entrée 29 et représentant l'effort total de séparation des rotors, c'est-à-dire l'effort de coupe durant la coupe. Ce signal est obtenu à l'aide de deux dynamomètres 30 et 31, ainsi logés dans les montants de la cisaille qu'ils délivrent sur leurs fils de sortie 32 et 33 une tension électrique proportionelle à l'effort de séparation des rotors l'un de l'autre. Un exemple de réalisation de ces dynamomètres sera décrit ci-après. Les signaux ainsi délivrés en 32 et 33 sont additionnés dans l'additionneur 34 avant d'attaquer l'amplificateur 28.

L'amplificateur 28 est avantageusement pourvu d'un seuil d'inhibition, de sorte que son signal de sortie est nul tant que l'effort n'est pas supérieur à un certain seuil permettant d'affranchir l'équipement des aléas que pourraient introduire les dérives de zéros des dynamomètres 30 et 31 en dehors de la période de coupe.

Le fonctionnement du dispositif est le suivant:

Dans les réalisations antérieures, c'est le ralentissement provoqué par la coupe qui entraîne l'augmentation du courant dans le moteur. Or ce ralentissement, qui est conséquence du travail de l'effort de coupe, est fonction de l'intégrale par rapport au temps de cet effort. La modification du courant est donc sensiblement en retard sur la coupe, d'où le blocage du moteur dans certaines conditions de fonctionnement.

Avec un appareillage pourvu du dispositif selon l'invention, le régulateur d'intensité 17 reçoit en 18 une référence exactement synchrone du couple résistant dû à la coupe, et d'une amplitude approximativement proportionnelle à celui-ci. Il se fournit donc en 13 un complément de courant d'induit en synchronisme parfait avec l'effort de coupe, ce qui permet d'éviter le blocage.

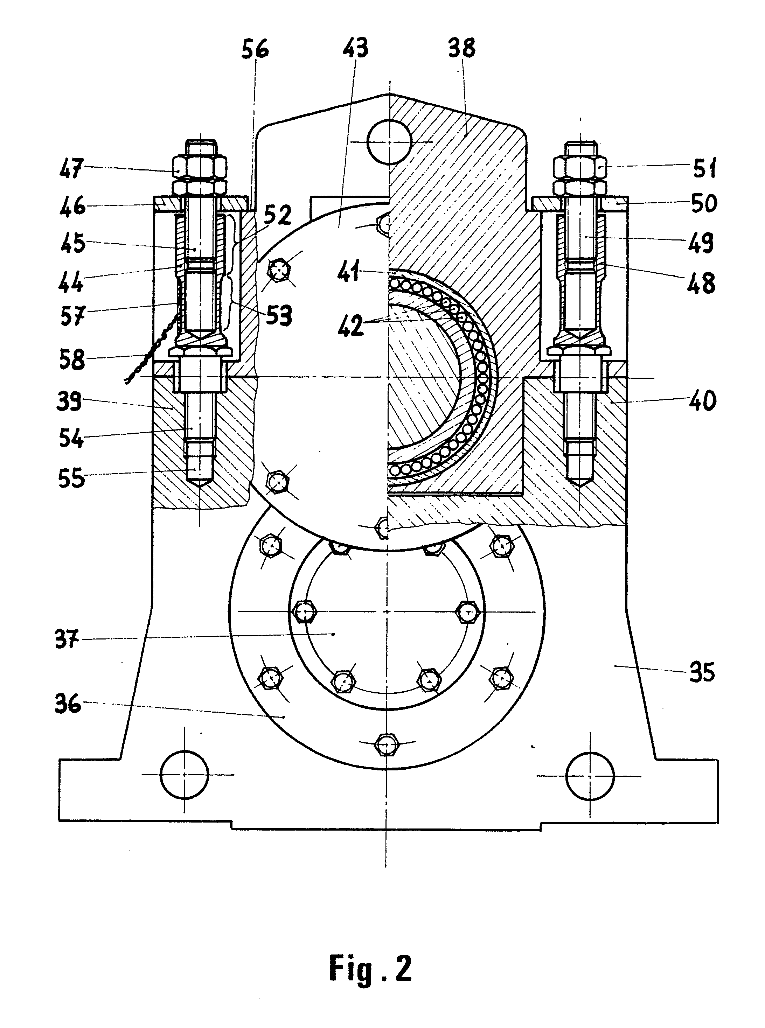

On a représenté sur la figure 2 une vue en bout et coupe partielle d'une cisaille rotative équipée de dynamomètres pour l'application du dispositif de la figure 1.

Sur la figure 2, on a désigné par la référence 35 la partie inférieure du montant situé à droite par rapport au sens de circulation du produit, c'est-à-dire celui contenu dans le carter 7 de la figure 1. Il reçoit le roulement droit du rotor inférieur 5 de la figure 1, dont on distingue la bride d'arrêt 36, apparaissant autour du couvercle de protection 37 de l'extrémité droite dudit rotor inférieur 5.

La référence 38 désigne le chapeau dudit montant, venant s'encastrer dans les parties 39 et 40 de ladite partie inférieure 35. Le chapeau 38 reçoit le roulement droit 41 du rotor supérieur 3 de la figure 1, dont on distingue les rouleaux 42 et la bride d'arrêt 43.

L'ensemble des pièces 44, 45, 46, 47 en amont, et 48, 49, 50, 51 en aval, immobilise verticalement le chapeau 38 par rapport au montant inférieur 35. La pièce 44 de l'ensemble amont par exemple comprend trois parties:

— une partie supérieure 52, creuse et taraudée, recevant la tige filetée 45,
— une partie intermédiaire 53, également creuse,
— une partie inférieure 54 filetée et venant se visser dans un trou taraudé 55 du montant

inférieur 35.

La tige filetée 45 est immobilisée dans la pièce 44 par exemple à l'aide d'une résine »frein-filet«. Par ailleurs, une plaquette 46 est appuyée contre un bossage 56 du chapeau 38 par l'intermédiaire d'un ensemble 47 à écrou et contre-écrou.

La même disposition est réalisée du côté aval du montant avec les pièces 48, 49, 50, 51.

Dans l'exemple considéré, l'ensemble amont (44, 45, 46, 47) constitue l'ensemble dynamométrique indiqué schématiquement par le repère 30 sur la figure 1. Dans ce but, une jauge de contrainte 57 a été collée, selon une technique classique en extensométrie, sur la zone intermédiaire 53 du tirant 44. Il apparaît alors, sur les fils de connection 58, un signal électrique proportionnel à l'effort de traction appliqué au tirant 44, ce signal étant mis en forme à l'aide d'un appareillage électrique classique non représenté puis appliqué sur le fil 32 de la figure 1.

Au lieu de coller une jauge de contrainte sur le tirant amont 44, il est également possible d'en coller une sur le montant aval 48, ou sur les deux à la fois, en fonction des impératifs de mesure.

Le fonctionnement du dispositif dynamométrique de la figure 2 est le suivant:

On prend la précaution de serrer très modérément l'écrou 47 de façon à juste appuyer la plaquette 46, et n'introduire ainsi qu'une faible précontrainte dans le tirant 44.

Lors de la coupe, l'effort de coupe tente de séparer le chapeau 38 du montant inférieur 35, et cet effort se trouve équilibré par la traction dans les tirants 44 et 48. Le système à jauge(s) de contrainte délivre alors un signal proportionnel à cette traction, donc à la portion de l'effort de coupe prise par le montant considéré. On a indiqué précédemment que l'amplificateur 28 de la figure 1 était avantageusement muni d'un seuil d'inhibition. Ceci permet d'affranchir le signal de mise à l'échelle élaboré par cet amplificateur du signal résiduel présent hors de la période de coupe, et dû au serrage des écrous tels que 47.

## Revendications

1. Dispositif de commande de cisaille rotative (1), du type comportant deux rotors superposés (3, 5) portant chacun une lame coupante (4, 6) et entraînés à vitesse variable par l'intermédiaire d'un moteur électrique (9), caractérisé en ce qu'il est muni d'un dispositif (30, 31, 34, 28) de mesure de l'effort de coupe permettant de commander un régulateur d'alimentation (17) relié au moteur, de manière à entraîner pendant la coupe une augmentation de tension de courant d'alimentation dudit moteur suffisante pour éviter son blocage, ledit dispositif de mesure de l'effort de coupe étant constitué par un ou plusieurs dispositifs dynamométriques (30, 31) relié(s) au(x) dispositif(s) de support d'extrémité (35, 38) d'au moins un desdits rotors.

2. Dispositif de commande selon la revendication 1, caractérisé en ce que ledit ou lesdits dispositifs dynamométriques est/sont constitué(s) par un dispositif de mesure (44, 57) de l'effort de séparation des parties supérieure (38) et inférieure (35) d'au moins un des montants de soutien desdits rotors.

3. Dispositif de commande selon l'une quelconque des revendications 1 ou 2, caractérisé en ce qu'il comporte un dispositif de mesure (30, 31) à chaque extrémité de soutien desdits rotors, les signaux issus de ces dispositifs étant ensuite appliqués par l'intermédiaire d'au moins un dispositif additionneur (34) sur une entrée de référence (18) dudit régulateur d'alimentation (17).

4. Dispositif de commande selon la revendication 3, caractérisé en ce que le régulateur d'alimentation (17) est constitué par le régulateur de commande de la vitesse de rotation dudit moteur en fonction de la vitesse du produit et des longueurs de coupe à effectuer et en ce que ledit régulateur (17) comporte une seule et même entrée de référence (18) reliée à un dispositif d'addition (27) dudit signal de mesure de l'effort de coupe et des signaux représentatifs de la coupe à effectuer.

## Patentansprüche

1. Steuervorrichtung für eine rotierende Schere (1), die zwei übereinander angeordnete Rotoren (3, 5) aufweist, von denen jeder ein Schneideblatt (4,6) trägt und die mittels eines Elektromotors (9) mit variabler Geschwindigkeit antreibbar sind, dadurch gekennzeichnet, daß sie mit einer Schneidkraftmeßeinrichtung (30, 31, 34, 28) versehen ist, mit der ein an dem Motor angeschlossener Speiseregler (17) steuerbar ist, derart, daß während eines Schnittes eine Erhöhung der Spannung des Speisestromes des Motors erfolgt, die ausreicht, sein Blockieren zu verhindern, und daß die Schneidkraftmeßeinrichtung von einer oder mehreren Kraftmeßeinrichtung(en) (30, 31) gebildet ist, die mit der (den) Stütz- bzw. Auflagereinrichtung(en) (35, 38) des Endes von zumindest einem der Rotoren verbunden ist (sind).

2. Vorrichtung nach Anspruch 1, dadurch gekennzeichnet, daß die Kraftmeßeinrichtung(en) von einer Meßeinrichtung (44, 57) für die für eine Trennung des oberen (38) und unteren (35) Teiles zumindest einer der Stützen bzw. Abstützungen der Rotoren aufzuwendende Kraft gebildet ist (sind).

3. Vorrichtung nach Anspruch 1 oder 2, dadurch gekennzeichnet, daß sie an jedem Ende der Stütze bzw. Abstützung der Rotoren eine Meßeinrichtung (30, 31) besitzt und daß die von diesen Einrichtungen abgegebenen Signale über zumindest eine dazwischenliegende Additionseinrichtung (34) auf einen Referenzeingang (18) des Speisereglers (17) geführt sind.

4. Vorrichtung nach Anspruch 3, dadurch gekennzeichnet, daß der Speiseregler (17) von einem Geschwindigkeitsregler für die Rotation des Motors in Abhängigkeit von der Geschwindigkeit des Produktes und der Länge des durchzuführenden Schnittes gebildet ist und daß der Speiseregler (17) mit dem einzelnen Referenzeingang (18) mit einer Addiereinrichtung (27) für das Schneidkraftmeßsignal und die für den durchzuführenden Schnitt repräsentativen Signale verbunden ist.

**Claims**

1. Control device for a rotary shearing machine (1), of the type comprising two superimposed rotors (3, 5) each carrying a cutting blade (4, 6) and being driven at variable speed with the aid of an electric motor (9), characterised in that it is provided with a device (30, 31, 34, 28) for measuring the cutting stress, which measuring device enables a feed regulator (17) connected to the motor to be controlled, in such a manner as to bring about during the cutting an increase in the supply current voltage of the said motor to a sufficient extent to prevent its jamming, the said cutting stress measuring device being composed of one or more dynamometer devices (30, 31) connected to the end support device or devices (35, 38) of at least one of the said rotors.

2. Control device according to Claim 1, characterised in that the said dynamometer device or devices is or are composed of a device (44, 57) measuring the separation force of the upper part (38) and lower part (35) of at least one of the support uprights of the said rotors.

3. Control device according to either of Claims 1 and 2, characterised in that it comprises a measuring device (30, 31) at each support end of the said rotors, the signals originating from these devices being then applied through at least one adding device (34) to a reference input (18) of the said feed regulator (17).

4. Control device according to Claim 3, characterised in that the feed regulator (17) consists of the regulator controlling the speed of rotation of the said motor in dependence on the speed of the product and the length of cut to be made, and in that the said regulator (17) has only one and the same reference input (18) connected to an adding device (27) adding the said signal measuring the cutting stress and the signals representing the cut which is to be made.

**Fig.1**

**Fig . 2**